# EUROPEAN PATENT APPLICATION

(11) **EP 4 609 720 A1**
(43) Date of publication of application: **03.09.2025**
(21) Application number: 24160716.7
(22) Date of filing: 29.02.2024
(51) Int. Cl.: A23D 7/00

(54) **EDIBLE FAT-CONTINUOUS EMULSION**

(71) Applicant: Vandemoortele Lipids NV, 9000 Gent (BE)
(72) Inventor: HEYMAN, Bart, 8870 Izegem (BE); WATERBLEY, Ellen, 8870 Izegem (BE); COUDRON, Joost, 8870 Izegem (BE); RIMAUX, Tom, 8870 Izegem (BE); COGHE, Jonathan, 8870 Izegem (BE)
(74) Representative: De Clercq & Partners

(57) **Abstract**

An edible fat-continuous emulsion comprising an aqueous phase and between 15.0 and 75.0 wt .% of a fat phase, wherein the fat phase comprises at least one liquid oil and at most 60.0 wt.% of a hardstock, wherein the hardstock comprises, relative to the total weight of all fatty acid residues in the hardstock, at most 5.0 wt.% of saturated C12 fatty acid residues (C12:0); at most 3.0 wt.% of trans fatty acid residues (TFA); at most 15.0 wt.% of saturated C16 fatty acid residues (C16:0); at least 35.0 wt.% to at most 55.0 wt.% of saturated C18 fatty acid residues (C18:0); and a weight ratio of mono-unsaturated C18 fatty acid residues to poly-unsaturated C18 fatty acid residues (C18:1/(C18:2+C18:3)) of at least 1.,; and wherein the hardstock comprises at least 5.0 wt.% of SatSatSat triglycerides, and wherein the emulsion has a D_{3,3} of at most 10.0 µm.

## Description

### FIELD OF THE INVENTION

The present invention relates to edible fat-continuous emulsions suitable for use as spread products. The invention also relates to a method for preparing said fat-continuous emulsion, and a spread product comprising the fat-continuous emulsion and uses thereof.

### BACKGROUND OF THE INVENTION

Fat-continuous food compositions comprising fats and oils, including spreads, margarine, and similar products, play a significant role in the culinary landscape, offering consumers a wide range of options for enhancing the taste, texture, and nutritional profile of various dishes. In particular household margarines and spreads are formulated to provide a spreadable consistency that can be easily applied to bread, crackers, and other food items, making them convenient and versatile additions to meals and snacks. Said compositions are typically supplied in the form of an emulsion comprising blends of solid fat(s) and liquid oil(s), which make up the fat phase, and an aqueous phase. Small droplets of water are dispersed uniformly throughout the fat phase, which is at least partially in a crystalline form. The solid fat(s) (also called the structuring fat or hardstock fat) provides the structure and texture to the resulting emulsion by crystallisation of the triglycerides in the fat phase. Therefore, the solid fat(s) typically has a higher content of saturated fatty acids. The liquid oil typically contains more unsaturated fatty acids. Consequently, the selection of the fat phase and its constituents strongly determines the application range of the spreads and similar products in terms of processing and use.

Palm oil, which is rich in palmitic acid (i.e., saturated C16 fatty acid), has traditionally been used as a major source of solid fat in emulsions for spread products. However, for sustainability reasons manufacturers have also considered alternative sources of solid fats. This is further motivated by the negative effect of palmitic acid on blood cholesterol level. Food products containing a high palmitic acid content or fractions thereof may contribute to increased incidence of cardiovascular disease. Therefore, also from a nutritional point of view, it is desired to consider alternatives to keep the palmitic acid content in emulsions for fat and/or oil-containing food products minimal.

For similar sustainability and nutritional reasons, the use of cocoa butter, which also has a relatively high content of palmitic acid, in hardstocks for spreads is undesirable.

One of the alternatives for tropic oils and fats, including palm oil and cocoa butter, that has been considered is shea butter, and more particularly saturated fatty acid enriched fractions thereof such as shea stearin. However, the variable availability of shea butter is an additional problem, and the fractionation comes with a significant additional production cost, which pose problems for its commercial use.

Some technical solutions that have been proposed as alternative sources for solid fat include hydrogenated fats and/or oils. Hydrogenation is a process of hardening fats and oils by converting unsaturated fatty acids in the fats and oils to saturated fatty acids, thereby improving the structuring properties of the fats and oils. However, hydrogenation of triglycerides is perceived by consumers as non-natural and is therefore not desired.

Another example is described in WO 2022/248578 A1 directed to a solid fat for spread applications which is obtained by interesterification of a blend of fats, wherein one of the fats (designated as feedstock) that is interesterified has a very high C18:0 content and/or very low C16:0 content, with another fat that can provide mid-range fatty acids such as lauric acid (C12:0) and myristic acid (C14:0), known in the field as lauric fats. Typical lauric fats include palm kernel fat and coconut oil. However, as noted above the use of tropical oils, including palm kernel oil and coconut oil, is criticized from the point of view of sustainability. Moreover, lauric acid too is known as an atherogen and also from a nutritional point of view there is a desire to keep the lauric acid content in emulsions for food products minimal.

Hence, there remains a need for alternative sources of fats and oils for structuring fats for spreads. In particular, there is a desire to use less fats and oils of tropical origin, and to use fats and oils with a low content of C12:0 and C16:0.

However, changes in a solid fat's formulation and/or structure can have a negative impact on the textural and functional properties of the resulting spreads and similar fat products, as well as their processability. In particular, for low fat spreads that have a low content of structuring fat and a relatively high proportion of an aqueous phase, it is important that the structuring fat still allows to stabilize the water droplets in the emulsion. On the other hand, the flavours contained in the water phase should be released during consumption to appeal to the consumer. Additionally, the fat matrix should melt sufficiently in the mouth to avoid a waxy sensation.

In view of the above, there remains a need for the provision of fat-continuous emulsions for spreads and similar fat and/or oil-containing food products that are characterized in that less or preferably no use is made in their preparation of oils and fats of tropical origin and which preferably do not contain hydrogenated fats and oils, while simultaneously being characterized with good textural properties, a favorable nutritional profile, and favorable organoleptic characteristics. There also remains a need to use raw materials that are commercially available in sufficient amounts to obtain products of highest value.

### SUMMARY OF THE INVENTION

It has now been found that some or all of the above challenges can be addressed, and objectives can be achieved, either individually or in any combination, by an edible fat-continuous emulsion as defined herein.

As demonstrated in the experimental section, the suitability of a fat phase for the production of qualitative spread products is not only determined by the solid fat content profile. Unexpectedly, the inventors have found that qualitative spread products are obtained using a hardstock that comprises an increased weight ratio of mono-unsaturated to poly-unsaturated C18 fatty acids (C18:1/(18:2 + C18:3)), as well as an acceptable amount of higher melting trisaturated triglycerides.

More particularly, it has been found that the specific fat phase of the emulsion according to the present invention offers several functional advantages in terms of texture, spreadability, mouthfeel, stability, nutritional profile, and flavour of the emulsion and/or food product(s) comprising said emulsion, in particular when said emulsion is used as a spread product. The fat phase is further characterized in that it does not require fats and oils of tropical origin, nor fats and oils of GMO origin and preferably can be made from non-hydrogenated fats and oils. Hence, allowing to reconcile both customer preferences and functional considerations.

Advantageously, the structural and functional properties of the emulsion can be achieved with a reduced need for structuring fats in the fat phase (60.0 wt.% or less structuring fat, relative to the weight of the fat phase). Advantageously, the fat phase can incorporate more liquid oil, leading to emulsions containing higher amounts of poly-unsaturated fatty acids and hence a better nutritional profile.

Another advantage of the optimized fat phase composition as described herein is that it may provide the aforementioned desired functional and sensory attributes at an economical price point.

Accordingly, an aspect of the present invention relates to an edible fat-continuous emulsion comprising an aqueous phase and between 15.0 and 75.0 wt.% of a fat phase, relative to the total weight of the emulsion;
- wherein the fat phase comprises at least one liquid oil and at most 60.0 wt.% of a hardstock, relative to the total weight of the fat phase;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 1.5;
- wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a volume weighted average water droplet size (D_{3,3}) of at most 10.0 µm, as determined by pulsed-field gradient NMR.

Another aspect of the present invention relates to a method for the preparation an edible fat-continuous emulsion according to the invention, the method comprising:
a) blending the aqueous phase and the fat phase; and
b) processing the blend of the fat phase and the aqueous phase in a processing line comprising at least one pump, at least one working unit, and optionally at least one cooling unit.

A further aspect of the present invention relates to a spread product comprising the edible fat-continuous emulsion according to the invention.

Yet a further aspect of the invention relates to use the edible fat-continuous emulsion according to the invention, or a spread product according to the invention as a table spread, or as a baking or frying margarine.

The above and other characteristics, features and advantages of the present invention will become apparent from the following detailed description, which illustrate, by way of example, the principles of the invention.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

The discussion of the background to the invention herein is included to explain the context of the invention. This is not to be taken as an admission that any of the material referred to was published, known, or part of the common general knowledge in any country as of the priority date of any of the claims. Throughout this disclosure, various publications, patents, and published patent specifications are referenced by an identifying citation. All documents cited in the present specification are hereby incorporated by reference in their entirety. In particular, the teachings or sections of such documents herein specifically referred to are incorporated by reference.

As used herein, the singular forms "a", "an", and "the" include both singular and plural referents unless the context clearly dictates otherwise. By way of example, "a step" means one step or more than one step. The terms "comprising", "comprises" and "comprised of" as used herein are synonymous with "including", "includes" or "containing", "contains", and are inclusive or openended and do not exclude additional, non-recited members, elements, or method steps. The terms also encompass "consisting of" and "consisting essentially of", which enjoy well-established meanings in patent terminology.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members. In another example, "one or more" or "at least one" may refer to 1, 2, 3, 4, 5, 6, 7 or more.

The terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

As used herein, the term "and/or" when used in a list of two or more items, means that any one of the listed items can be employed by itself or any combination of two or more of the listed items can be employed. For example, if a list is described as comprising group A, B, and/or C, the list can comprise A alone, B alone, C alone, A and B in combination, A and C in combination, B and C in combination, or A, B, and C in combination.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" or "in a particular embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while certain embodiments described herein include some but not other features included in other embodiments, combinations of features of different embodiments are meant to be within the scope of the invention, and form different embodiments, as would be understood by those in the art.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g. from 1.0 to 5.0 includes both 1.0 and 5.0). Any numerical range recited herein is intended to include all sub-ranges subsumed therein. This applies to numerical ranges irrespective of whether they are introduced by the expression "from... to..." or the expression "between... and..." or another expression.

As used herein, the terms "about" or "approximately" are used to provide flexibility to a numerical value or range endpoint by providing that a given value may be "a little above" or "a little below" said value or endpoint, depending on the specific context. Hence, the terms "about" or "approximately" as used herein when referring to a measurable value such as a parameter, an amount, a temporal duration, and the like, are meant to encompass variations of and from the specified value or endpoint, such as variations of +/-10% or less, preferably +/-5% or less, more preferably +/-1% or less, and still more preferably +/-0.1% or less of and from the specified value, insofar such variations are appropriate to perform in the disclosed invention.

Unless otherwise stated, use of the terms "about" or "approximately" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

The terms "wt.%," "vol%", or "mol%" refers to a weight percentage of a component, a volume percentage of a component, or molar percentage of a component, respectively, based on the total weight, the total volume of material, or total moles, which includes the component.

All references cited in the present specification are hereby incorporated by reference in their entirety. In particular, the teachings of all references herein specifically referred to are incorporated by reference.

Preferred statements (features) and embodiments and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below numbered statements and embodiments, with any other aspect and/or embodiment.
1. An edible fat-continuous emulsion comprising an aqueous phase and between 15.0 and 75.0 wt.% of a fat phase, relative to the total weight of the emulsion;
   - wherein the fat phase comprises at least one liquid oil and at most 60.0 wt.% of a hardstock, relative to the total weight of the fat phase;
   - wherein the hardstock comprises, relative to the total weight of all fatty acid residues in the hardstock:
      - at most 5.0 wt.% of saturated C12 fatty acid residues (C12:0);
      - at most 3.0 wt.% of trans fatty acid residues (TFA);
      - at most 15.0 wt.% of saturated C16 fatty acid residues (C16:0);
      - at least 35.0 wt.% to at most 55.0 wt.% of saturated C18 fatty acid residues (C18:0);
      - a weight ratio of mono-unsaturated C18 fatty acid residues to poly-unsaturated C18 fatty acid residues (C18:1/(C18:2+C18:3)) of at least 1.5;
   - wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
   - wherein the emulsion has a volume weighted average water droplet size (D_{3,3}) of at most 10.0 µm, as determined by pulsed-field gradient NMR.
2. The fat-continuous emulsion according to the preceding statement, wherein the hardstock comprises at least 5.5 wt.%, or at least 6.0 wt.%, or at least 6.5 wt.% of SatSatSat triglycerides, relative to the total weight of the hardstock.
3. The fat-continuous emulsion according to the preceding statement, wherein the hardstock comprises at most 25.0 wt.%, or at most 22.5 wt.%, or at most 20.0 wt.%, or at most 17.5 wt.%, or at most 15.0 wt.% of SatSatSat triglycerides, relative to the total weight of the hardstock.
4. The fat-continuous emulsion according to any one of the preceding statements, wherein the hardstock comprises at least 5.0 wt.% and at most 25.0 wt.%, or at least 5.0 wt.% and at most 22.5 wt.%, or at least 5.0 wt.% and at most 20.0 wt.%, or at least 5.5 wt.% and at most 20.0 wt.%, or at least 6.0 wt.% and at most 20.0 wt.%, or at least 6.0 wt.% and at most 17.5 wt.%, or at least 6.0 wt.% and at most 15.0 wt.%, or at least 6.5 wt.% and at most 15.0 wt.% of SatSatSat triglycerides, relative to the total weight of the hardstock.
5. The fat-continuous emulsion according to any one of the preceding statements, wherein the hardstock comprises at least 12.0 wt.% to at most 35.0 wt.%, or at least 15.0 wt.% to at most 35.0 wt.%, or at least 17.0 wt.% to at most 35.0 wt.%, or at least 20.0 wt.% to at most 35.0 wt.% of SSO triglycerides, relative to the total weight of the hardstock, said SSO triglycerides having stearic acid (C18:0) residues at the 1-position and 2-position of the glycerol backbone, and having oleic acid (C18:1) residues at the 3-position of the glycerol backbone.
6. The fat-continuous emulsion according to any one of the preceding statements, wherein the hardstock comprises a weight ratio of SSO triglycerides to SOS triglycerides (SSO/SOS) of at least 1.0, or at least 1.2, or at least 1.5, or at least 1.8, said SOS triglycerides having stearic acid (C18:0) residues at the 1-position and 3-position of the glycerol backbone, and having oleic acid (C18:1) residues at the 2-position of the glycerol backbone.
7. The fat-continuous emulsion according to any one of the preceding statements, wherein the hardstock comprises, relative to the total weight of all fatty acid residues in the hardstock:
   - at least 20.0 wt.%, or at least 22.5 wt.%, or at least 25.0 wt.%, or at least 27.5 wt.%, or at least 30.0 wt.%, or at least 32.5 wt.%, or at least 35.0 wt.% of mono-unsaturated C18 fatty acid residues (C18:1).
8. The fat-continuous emulsion according to any one of the preceding statements, wherein the hardstock comprises, relative to the total weight of all fatty acid residues in the hardstock:
   - at least 0.5 wt.%, or at least 1.0 wt.%, or at least 5.0 wt.%, or at least 7.5 wt.%, or at least 10.0 wt.% of poly-unsaturated C18 fatty acid residues (C18:2 and C18:3).
9. The fat-continuous emulsion according to any one of the preceding statements, wherein the hardstock comprises, relative to the total weight of all fatty acid residues in the hardstock:
   - at most 60.0 wt.%, or at most 55.0 wt.% of mono-unsaturated C18 fatty acid residues (C18:1).
10. The fat-continuous emulsion according to any one of the preceding statements, wherein the hardstock comprises, relative to the total weight of all fatty acid residues in the hardstock:
   - at most 35.0 wt.%, or at most 30.0 wt.% of poly-unsaturated C18 fatty acid residues (C18:2 and C18:3).
11. The fat-continuous emulsion according to any one of the preceding statements, wherein the hardstock comprises, relative to the total weight of all fatty acid residues in the hardstock:
   - at least 20.0 wt.% to at most 60.0 wt.%, or at least 25.0 wt.% to at most 60.0 wt.%, or at least 27.5 wt.% to at most 60.0 wt.%, or at least 30.0 wt.% to at most 60.0 wt.%, or at least 30.0 wt.% to at most 55.0 wt.%, or at least 35.0 wt.% to at most 55.0 wt.% of mono-unsaturated C18 fatty acid residues (C18:1).
12. The fat-continuous emulsion according to any one of the preceding statements, wherein the hardstock comprises, relative to the total weight of all fatty acid residues in the hardstock:
   - at least 0.5 wt.% to at most 35.0 wt.%, or at least 1.0 wt.% to at most 35.0 wt.%, or at least 5.0 wt.% to at most 35.0 wt.%, or at least 7.5 wt.% to at most 35.0 wt.%, or at least 10.0 wt.% to at most 35.0 wt.%, or at least 10.0 wt.% to at most 30.0 wt.% of poly-unsaturated C18 fatty acid residues (C18:2 and C18:3).
13. The fat-continuous emulsion according to any one of the preceding statements, wherein the hardstock comprises a weight ratio of mono-unsaturated C18 fatty acid residues to poly-unsaturated C18 fatty acid residues (C18:1/(C18:2+C18:3)) of at least 2.0, or at least 2.5, or at least 3.0, or at least 3.5, or at least 4.0, or at least 4.5, or at least 5.0, or at least 5.5 or at least 6.0, or at least 7.0, or at least 8.0, or at least 9.0, at least 10.0, or at least 15.0.
14. The fat-continuous emulsion according to any one of the preceding statements, wherein the emulsion has a crystalline content of at least 4.0 %, or at least 5.0 %, or at least 6.0 %, or at least 10.0 %, relative to the total emulsion at 5 °C after storing for at least 7 days.
15. The fat-continuous emulsion according to any one of the preceding statements, wherein the hardstock has a melting point of at least 35 °C, or at least 37.5 °C, or at least 40.0 °C, or at least 42.5 °C, or at least 45.0 °C.
16. The fat-continuous emulsion according to any one of the preceding statements, wherein the emulsion has a volume weighted average water droplet size (D_{3,3}) of at most 9.5 µm, or at most 9.0 µm, or at most 8.5 µm, or at most 8.0 µm, or at most 7.5 µm, or at most 7.0 µm, or at most 6.5 µm, or at most 6.0 µm, or at most 5.5 µm, or at most 5.0 µm, as determined by pulsed-field gradient NMR.
17. The fat-continuous emulsion according to any one of the preceding statements, wherein the emulsion has a volume weighted average water droplet size (D_{3,3}) of at least 2.0 µm.
18. The fat-continuous emulsion according to any one of the preceding statements, wherein the emulsion has a volume weighted average water droplet size (D_{3,3 cycle}) of at most 25.0 µm, or at most 20.0 µm, or at most 15.0 µm, or at most 10.0 µm after storing the emulsion for 24 h at 5 °C, followed by storing the emulsion for 24 h at 25°C and for 24 h at 10°C, as determined by pulsed-field gradient NMR.
19. The fat-continuous emulsion according to any one of the preceding statements, wherein the emulsion has a hardness of at most 800 g, or at most 700 g, or at most 650 g, preferably wherein the hardness is measured using a Brookfield CTX Texture Analyzer equipped with a cylindrical probe having a 12.7 mm diameter, a probe penetration rate of 2 mm/sec, a trigger force of 2 g, over a distance of 10 mm, after stabilizing the emulsion for 24 hours at a temperature of 5 °C.
20. The fat-continuous emulsion according to any one of the preceding statements, wherein the emulsion has a hardness of at least 75 g, or at least 100 g, or at least 125 g, preferably wherein the hardness is measured using a Brookfield CTX Texture Analyzer equipped with a cylindrical probe having a 12.7 mm diameter, a probe penetration rate of 2 mm/sec, a trigger force of 2 g, over a distance of 10 mm, after stabilizing the emulsion for 24 hours at a temperature of 5 °C.
21. The fat-continuous emulsion according to any one of the preceding statements, wherein the fat phase comprises at least 7.0 wt.% to at most 60.0 wt.%, or at least 7 wt.% to at most 55.0 wt.%, or at least 7.0 wt.% to at most 50.0 wt.%, or at least 10.0 wt.% to at most 45.0 wt.%, or at least 10.0 wt.% to at most 40.0 wt.% of the hardstock, relative to the total weight of the fat phase.
22. The fat-continuous emulsion according to any one of the preceding statements, wherein the fat phase has a solid fat content (SFC) value of at least 5.0% to at most 40.0%, or at least 5.0% to at most 30.0%, or at least 5.0% to at most 25.0% at 10 °C as measured according to method AOCS Cd 16b-93.
23. The fat-continuous emulsion according to any one of the preceding statements, wherein the fat phase has a solid fat content (SFC) value of at least 5.0% to at most 30.0%, or at least 5.0% to at most 25.0%, or at least 5.0% to at most 20.0% at 20 °C as measured according to method AOCS Cd 16b-93.
24. The fat-continuous emulsion according to any one of the preceding statements, wherein the fat phase has a solid fat content (SFC) value of a at most 15.0%, or at most 10.0%, or at most 7.0% or at least 0.5% to at most 7.0%, at 35 °C, as measured according to method AOCS Cd 16b-93.
25. The fat-continuous emulsion according to any one of the preceding statements, wherein the emulsion comprises at least 15.0 wt.% and at most 70.0 wt.%, or at least 18.0 wt.% and at most 70.0 wt.%, or at least 18.0 wt.% and at most 60.0 wt.%, or at least 18.0 wt.% and at most 50.0 wt.% of a fat phase, relative to the total weight of the emulsion.
26. The fat-continuous emulsion according to any one of the preceding statements, wherein the emulsion comprises at least 30.0 wt.%, or at least 35.0 wt.%, or at least 40.0 wt.%, or at least 50.0 wt.% of an aqueous phase, relative to the total weight of the emulsion.
27. The fat-continuous emulsion according to any one of the preceding statements, wherein the fat phase comprises at most 4.0 wt.%, or at most 3.0 wt.%, or at most 2.5 wt.%, or at most 2.0 wt.%, or at most 1.5 wt.%, or at most 1.0 wt.%, of saturated C12 fatty acid residues (C12:0), relative to the total weight of all fatty acid residues in the fat phase.
28. The fat-continuous emulsion according to any one of the preceding statements, wherein the hardstock comprises at most 14.0 wt.%, or at most 12.0 wt.%, or at most 10.0 wt.%, or at most 8.0 wt.%, or at most 5.0 wt.%, of saturated C16 fatty acid residues (C16:0), relative to the total weight of all fatty acid residues in the hardstock.
29. The fat-continuous emulsion according to any one of the preceding statements, wherein the hardstock comprises at most 2.5 wt.%, preferably at most 2.0 wt.%, preferably at most 1.5 wt.%, preferably at most 1.0 wt.% of trans fatty acid residues (TFA).
30. The fat-continuous emulsion according to any one of the preceding statements, wherein the fat phase comprises at least one liquid oil selected from the group consisting of rapeseed oil, canola oil, sunflower oil, high oleic sunflower oil, soybean oil, linseed oil, olive oil, corn oil, safflower oil, sesame oil, peanut oil, camelina oil, and fractions and/or combinations thereof.
31. The fat-continuous emulsion according to any one of the preceding statements, wherein the fat phase is essentially free from oils and fats derived from animal origin.
32. The fat-continuous emulsion according to any one of the preceding statements, wherein the fat phase is essentially free from oils and fats derived from genetically modified crops.
33. The fat-continuous emulsion according to any one of the preceding statements, wherein the fat phase comprises at least 40.0 wt.%, or at least 45.0 wt.%, or at least 50.0 wt.%, or at least 55.0 wt.%, or at least 60.0 wt.%, or at least 65.0 wt.% of at least one liquid oil, relative to the total weight of the fat phase.
34. The fat-continuous emulsion according to any one of the preceding statements, wherein the hardstock comprises or consists of an interesterified blend of one or more liquid oils and one or more fats.
35. The fat-continuous emulsion according to statement 34, wherein at least one fat of the blend comprises at least 80.0 wt.%, at least 85.0 wt.%, at least 90.0 wt.%, or at least 95.0 wt.% of saturated C18 fatty acid residues (C18:0), relative to the total weight of fatty acid residues in the fat.
36. The fat-continuous emulsion according to any one of the preceding statements, wherein the hardstock comprises or consists of a transesterified blend of one or more liquid oils and a fatty acid mixture.
37. The fat-continuous emulsion according to statement 36, wherein the fatty acid mixture of the blend comprises at least 80.0 wt.%, at least 85.0 wt.%, at least 90.0 wt.%, or at least 95.0 wt.% of saturated C18 fatty acids (C18:0), relative to the total weight of fatty acids in the mixture.
38. The fat-continuous emulsion according to any one of statements 34 to 37, wherein the blend, in particular the one or more fats and/or the one or more liquid oils of the blend, comprise at most 10.0 wt.%, or at most 5.0 wt.% of shea fat and/or at most 10.0 wt.%, or at most 5.0 wt.% of cocoa fat.
39. The fat-continuous emulsion according to any one of statements 34 to 38, wherein the blend comprises one or more liquid oils selected from the group consisting of: sunflower oil, high oleic sunflower oil, rapeseed oil, soybean oil, olive oil, and fractions and/or combinations thereof.
40. The fat-continuous emulsion according to any one of statements 34 to 39, wherein the blend comprises an oil having an increased oleic acid residue content, such as high oleic sunflower oil, preferably the oil comprising at least 65.0 wt.%, or at least 70.0 wt.%, or at least 75.0 wt.% or at least 80.0 wt.% of oleic acid residue, relative to the total weight of all fatty acid residues in the oil.
41. The fat-continuous emulsion according to any one of the preceding statements, wherein the hardstock is essentially free from hydrogenated triglycerides.
42. The fat-continuous emulsion according to any one of the preceding statements, wherein the fat phase is essentially free from hydrogenated triglycerides.
43. The fat-continuous emulsion according to any one of the preceding statements, wherein the hardstock is essentially free from tropical fats and oils selected from the group comprising or consisting of palm oil, coconut oil, shea butter, coconut butter, allanblackia oil, pentadesma butter, and fractions and combinations thereof.
44. The fat-continuous emulsion according to any one of the preceding statements, wherein the fat phase is essentially free from tropical fats and oils selected from the group comprising or consisting of palm oil, coconut oil, shea butter, coconut butter, allanblackia oil, pentadesma butter, and fractions and combinations thereof.
45. The fat-continuous emulsion according to any one of the preceding statements, wherein the emulsion is essentially free from milk proteins such as whey, (skimmed) milk or buttermilk.
46. A method for the preparation of an edible fat-continuous emulsion comprising an aqueous phase and between 15.0 and 75.0 wt.% of a fat phase, relative to the total weight of the emulsion, preferably an edible fat-continuous emulsion according to any one of statements 1 to 45, the method comprising blending the aqueous phase and the fat phase;
   - wherein the fat phase comprises at least one liquid oil and at most 60.0 wt.% of a hardstock, relative to the total weight of the hardstock;
   - wherein the hardstock comprises, relative to the total weight of all fatty acid residues in the hardstock:
      - at most 5.0 wt.% of saturated C12 fatty acid residues (C12:0);
      - at most 3.0 wt.% of trans fatty acid residues (TFA);
      - at most 15.0 wt.% of saturated C16 fatty acid residues (C16:0);
      - at least 35.0 wt.% to at most 55.0 wt.% of saturated C18 fatty acid residues (C18:0);
      - a weight ratio of mono-unsaturated C18 fatty acid residues to poly-unsaturated C18 fatty acid residues (C18:1/(C18:2+C18:3)) of at least 1.5;
   - wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
   - wherein the emulsion has a volume weighted average water droplet size (D_{3,3}) of at most 10.0 µm, as determined by pulsed-field gradient NMR.
47. The method according to statement 46, wherein the method further comprises a step of preparing the hardstock by enzymatic or chemical interesterification of a blend of one or more fats and one or more liquid oils.
48. The method according to statement 47, wherein at least one fat of the blend comprises at least 80.0 wt.%, at least 85.0 wt.%, at least 90.0 wt.%, or at least 95.0 wt.% of saturated C18 fatty acid residues (C18:0), relative to the total weight of fatty acid residues in the fat.
49. The method according to statement 46, wherein the method further comprises a step of preparing the hardstock by enzymatic or chemical transesterification of a blend one or more liquid oils and a fatty acid mixture.
50. The method according to statement 49, wherein the fatty acid mixture comprises at least 80.0 wt.%, at least 85.0 wt.%, at least 90.0 wt.%, or at least 95.0 wt.% of saturated C18 fatty acids (C18:0), relative to the total weight of fatty acids in the mixture.
51. The method according to any one of statements 47 to 50, wherein at least one oil of the blend comprises a weight ratio of mono-unsaturated C18 fatty acid residues to poly-unsaturated C18 fatty acid residues (C18:1/(C18:2+C18:3)) of at least 1.5, or at least 2.0, or at least 2.5, or at least 3.0, or at least 3.5, or at least 4.0, or at least 4.5, or at least 5.0, or at least 5.5 or at least 6.0, or at least 7.0, or at least 8.0, or at least 9.0, at least 10.0, or at least 15.0.
52. The method according to any one of statements 47 to 51, wherein the blend comprises one or more liquid oils selected from the group consisting of: sunflower oil, high oleic sunflower oil, rapeseed oil, soybean oil, olive oil, and fractions and/or combinations thereof.
53. The method according to any one of statements 47 to 52, wherein the one or more liquid oils of the blend comprise at least one oil having an increased oleic acid content, such as high oleic sunflower oil, preferably the oil having an increased oleic acid content comprising at least 60.0 wt.%, or at least 65.0 wt.%, or at least 70.0 wt.%, or at least 75.0 wt.% or at least 80.0 wt.% of oleic acid residues, relative to the total weight of fatty acid residues in the oil.
54. The method according to any one of statements 47 to 53, wherein the blend comprises at least 25.0 wt.%, or at least 30.0 wt.%, or at least 35.0 wt.%, or at least 40.0 wt.%, or at least 45.0 wt.%, or at least 50.0 wt.% of the one or more fats or the fatty acid mixture, relative to the total weight of the blend.
55. The method according to any one of statements 47 to 54, wherein the blend comprises at most 40.0 wt.%, or at most 55.0 wt.%, or at most 60.0 wt.%, or at most 65.0 wt.%, or at most 70.0 wt.%, or at most 75.0 wt.% of the one or more liquid oils, relative to the total weight of the blend.
56. The method according to any one of statements 47 to 55, wherein the chemical interesterification or transesterification is performed at a temperature of at least 80 °C to at most 240 °C, or at least 100 °C to at most 240 °C, or at least 100 °C to at most 220 °C, or at least 100 °C to at most 200 °C, or at least 110 °C to at most 200 °C.
57. The method according to any one of statements 47 to 56, wherein the chemical interesterification or transesterification is performed in less than 24 hours, or less than 20 hours, or less than 18 hours, or less than 15 hours, or less than 12 hours, or less than 10 hours, or less than 5 hours.
58. The method according to any one of statements 47 to 57, wherein the method further comprises a step of processing the blend of the fat phase and the aqueous phase in a processing line comprising at least one pump, at least one cooling unit, and/or at least one working unit.
59. The method according to statement 58, wherein the at least one cooling unit comprises an A unit or a scraped surface heat exchanger.
60. The method according to any one of statements 58 or 59, wherein the at least one working unit comprises a C unit or a crystallizer or rotary pin worker.
61. The method according to any one of statements 58 to 60, wherein the total residence time in the at least one working unit is at least 60 seconds, or at least 70 seconds, or at least 80 seconds, or at least 90 seconds.
62. The method according to any one of statements 58 to 61, wherein the blend of the fat phase and the aqueous phase is cooled to a temperature between 4.0 °C and 15.0 °C, or between 5.0 °C and 15.0 °C, or between 5.0 °C and 13.0 °C.
63. A spread product comprising an edible fat-continuous emulsion according to any one of statements 1 to 45.
64. The spread product according to statement 63, further comprising emulsifiers, water soluble components and/or fat soluble components, preferably wherein the fat soluble component is selected from the group consisting of sterolesters, stanolesters, colorants, vitamins, antioxidants and aromas.
65. Use of an edible fat-continuous emulsion according to any one of statements 1 to 45, or a spread product according to any one of statements 63 or 64 as a table spread, or as a baking or frying margarine.

When describing the present invention, the terms used are to be construed in accordance with the following definitions, unless a context dictates otherwise.

The term "emulsion", as used herein, has a well-accepted meaning to one of ordinary skill in the art. In particular, an emulsion generally refers to a dispersed system comprising typically two immiscible phases, a first phase (e.g., water) dispersed in another phase(e.g., oil and/or fat) in the form of droplets. An emulsion consists of a continuous phase, also referred to as an external phase, and a dispersed phase, also known as an internal phase. Emulsions may be classified as oil-in-water (O/W or water-continuous) or water-in-oil (W/O or fat-continuous) based on the nature of the dispersed phase relative to the continuous phase.

The terms "oil" or "liquid oil", as used herein interchangeably, generally refers to a substance or composition comprising triglycerides that is liquid at room temperature. Preferably, said substance or composition is also liquid at temperatures below room temperature such as below 15, 10, or 5 °C.

The term "fat", as used herein, generally refers to a substance or composition comprising triglycerides that is solid at room temperature. The use of the terms "oil", "liquid oil", or "fat" is hence interchangeable depending on the circumstances that are clear and known in the art.

The terms "triglyceride", "triacylglycerol", "triacylglyceride", or "TAG", as used herein interchangeably, have a well-accepted meaning to one of ordinary skill in the art. In particular, a triglyceride generally refers to an ester consisting of a glycerol backbone and three fatty acid substituents. In other words, each of the three hydroxyl (-OH) groups of the glycerol backbone independently is esterified with a fatty acid chain, which may vary in length, saturation, and configuration. Unsaturated fatty acids comprise one or more double bonds, which may each independently have a cis or trans configuration. In trans configuration (a trans fatty acid), the carbon chain extends from opposite sides of the double bond, whereas, in cis configuration (a cis fatty acid), the carbon chain extends from the same side of the double bond.

The nomenclature "CX" refers to a fatty acid comprising X-amount of carbon atoms C, e.g. a C14 fatty acid has 14 carbon atoms while a C18 fatty acid has 18 carbon atoms.

The nomenclature "CX:Y" refers to a fatty acid comprising X-amount of carbon atoms C and Y-amount of double bonds, e.g. a C14:0 fatty acid has 14 carbon atoms and 0 double bonds while a C18:1 fatty acid has 18 carbon atoms and 1 double bond.

The terms "spread" or "spread product", as used herein, has a well-accepted meaning to one of ordinary skill in the art. A spread or spread product refers to a (semi-)solid fat and/or oil-containing food product that is usually smooth and spreadable at room temperature.

The terms described above and others used in the specification are well understood to those in the art.

An aspect of the present invention relates to an edible fat-continuous emulsion comprising an aqueous phase and between 15.0 and 75.0 wt.% of a fat phase, relative to the total weight of the emulsion;
- wherein the fat phase comprises at least one liquid oil and at most 60.0 wt.% of a hardstock, relative to the total weight of the fat phase;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 1.5;
- wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a volume weighted average water droplet size (D_{3,3}) of at most 10.0 µm, as determined by pulsed-field gradient NMR.

The present edible fat-continuous emulsion and (preferred) embodiments thereof, have the advantage that they can be made from non-hydrogenated fat and oils and they can be made essentially free from oils and fats of tropical origin and GMO origin, while still providing desired functional properties. In particular, the present fat-continuous emulsion provides a desired texture, spreadability, mouthfeel, stability, and/or shelf life, particularly when used as a spread product. Consequently, and in some embodiments, the edible fat-continuous emulsion is a spread , preferably a low fat spread.

Consumer preferences necessitate modifications to product formulations and manufacturing processes. It should be understood that the fat-continuous emulsion as disclosed herein may advantageously be designed or formulated to meet such requiring demands, without losing functional properties or even improving them.

In some embodiments, the fat-continuous emulsion is essentially free or free from milk proteins such as whey, (skimmed) milk or buttermilk. Advantageously, flavour release (i.e. taste) in the fat-continuous emulsion according to the invention was acceptable without requiring the addition of milk, sour milk or other milk preparations or milk proteins such as whey, (skimmed) milk or buttermilk.

In some embodiments, the fat-continuous emulsion is essentially free from oils and fats derived from animal origin.

In some embodiments, the fat-continuous emulsion is essentially free from oils and fats derived from genetically modified crops.

In some embodiments, the fat-continuous emulsion is essentially free or free from oils or fats of tropical origin. Oils or fats of tropical origin include palm oil, coconut oil, shea butter, coconut butter, allanblackia oil, pentadesma butter and/or fractions derived therefrom.

In some embodiments, the fat-continuous emulsion is essentially free or free from hydrogenated triglycerides, or the triglycerides in the fat-continuous emulsion are non-hydrogenated triglycerides.

The emulsion has a volume weighted average water droplet size (D_{3,3}) of at most 10.0 µm. In preferred embodiment, the emulsion may have a volume weighted average water droplet size (D_{3,3}) of at most 9.5 µm, or at most 9.0 µm, or at most 8.5 µm, or at most 8.0 µm, or at most 7.5 µm, or at most 7.0 µm, or at most 6.5 µm, or at most 6.0 µm, or at most 5.5 µm, or at most 5.0 µm, as determined by pulsed-field gradient Nuclear Magnetic Resonance (NMR) spectroscopy.

In some embodiments, the emulsion may have a volume weighted average water droplet size (D_{3,3}) of at least 2.0 µm. Advantageously, the present invention provides a fat-continuous emulsion comprising a dispersion of water droplets of desirable size.

In some embodiments, the emulsion may have a volume weighted average water droplet size (D_{3,3 cycle}) of at most 25.0 µm, or at most 20.0 µm, or at most 15.0 µm, or at most 10.0 µm after storing the emulsion for 24 h at 5 °C, followed by storing the emulsion for 24 h at 25°C and for 24 h at 10°C.

In some preferred embodiments, the emulsion may have a crystalline content of at least 4.0 %, or at least 5.0 %, or at least 6.0 %, or at least 10.0 % at 5 °C after storing for at least 7 days, relative to the total emulsion. The present emulsion provides that a fat and/or oil-based food product may be prepared with an optimized crystalline content meeting specific consumer preferences in terms of consistency, firmness and mouthfeel.

According to certain embodiments, the emulsion is further characterized by a specific hardness, in particular a hardness of from 75.0 to 800.0 g, or from 100.0 to 800.0 g, or from 100.0 to 700.0 g, or from 125.0 to 700.0 g, or from 125.0 to 650.0 g, preferably wherein the hardness is measured in accordance with the below-mentioned method based on the Brookfield CTX Texture Analyzer after the emulsion has been stabilized for 24 hours at a temperature of 5 °C.

The hardness of the emulsion and/or a fat and/or oil-containing food product such as spread product comprising said emulsion may be measured by methods known to the person skilled in the art. For example, the hardness of the emulsion or the food product may be measured using a penetrometer. Within the scope of the present invention, the hardness of the emulsion and/or a food product comprising said emulsion, as described above, is preferably measured after the the emulsion or the food product has been stabilized for a specific predefined period of time at a specific predefined temperature, preferably after the emulsion or the food products has been stabilized for 24 hours at 5°C, using a Brookfield CTX Texture Analyzer equipped with a cylindrical probe having a 4.0 mm diameter, a probe penetration rate of 2 mm/sec, a trigger force of 2 g, over a distance of 10 mm. Next, the required peak force is read out and expressed in g. The average hardness value is preferably determined based on at least 3 measurements.

The relative amount and ratio of the two immiscible phases in the emulsion may present significant challenges on controlling the stability, texture, and spreadability of said emulsion. Advantageously, it has been found that the specific fat phase as disclosed herein provides that an emulsion may be formulated with a high aqueous content. The present emulsion may be particularly useful for use in low fat containing products such as low fat spreads.

In some embodiments, the emulsion may comprise at least 15.0 wt.%, or at least 20.0 wt.%, or at least 25.0 wt.%, or at least 30.0 wt.%, of an aqueous phase, relative to the total weight of the emulsion.

In some preferred embodiments, the emulsion may comprise at most 75.0 wt.%, or at most 70.0 wt.%, or at most 65.0 wt.%, or at most 60.0 wt.%, or at most 55.0 wt.%, or at most 50.0 wt.% of an aqueous phase, relative to the total weight of the emulsion.

The term "aqueous phase", as used herein, refers to a liquid phase comprising water, and optionally water soluble substances as described elsewhere herein that may be dissolved or dispersed. Said phase is typically immiscible with the (partially solid or solid) fat phase.

The fat-continuous emulsion according to the invention comprises between 15.0 and 75.0 wt.% of a fat phase, relative to the total weight of the emulsion. In certain embodiments, the emulsion may be a "low fat" emulsion comprising at most 50.0 wt.% such as between 15.0 and 50.0 wt.% or between 18.0 and 50.0 wt.% of a fat phase, relative to the total weight of the emulsion.

It is to be understood herein that in the fat-continuous emulsions of the invention comprising between 15.0 and 75.0 wt.% of a fat phase, the remainder of the emulsion is an aqueous phase which amounts up to 100 wt.%, relative to the total weight of the emulsion. The fat-continuous emulsion according to the invention comprises between 15.0 and 75.0 wt.% of a fat phase and between 25.0 and 85.0 wt.% of a an aqueous phase, relative to the total weight of the emulsion.

In some preferred embodiments, the emulsion may comprise at least 15.0 wt.% and at most 70.0 wt.%, or at least 18.0 wt.% and at most 70.0 wt.%, or at least 18.0 wt.% and at most 60.0 wt.%, or at least 18.0 wt.% and at most 50.0 wt.% of a fat phase, relative to the total weight of the emulsion. In some preferred embodiments, the emulsion may comprise at least 30.0 wt.% and at most 85.0 wt.%, or at least 30.0 and at most 82.0 wt.%, or at least 40.0 and at most 82.0 wt.%, or at least 50.0 and at most 82.0 wt.% of an aqueous phase, relative to the total weight of the emulsion.

The term "fat phase", as used herein, refers to a phase comprising oils and/or fats, and optionally fat soluble substances such as emulsifiers, sterolesters, stanolesters, colorants, aromas, antioxidants, and/or vitamins.

In particular, the fat phase as disclosed herein comprises at least one liquid oil and at most 60.0 wt.% of a hardstock, relative to the total weight of the fat phase.

Typically the fat phase has a given solid content providing the emulsion with stability and textural properties. The solid fat content (SFC) profile, as determined by pulsed-field gradient NMR spectroscopy, is typically used within the art to determine the content of crystals that the fat phase is able to form in the emulsion in a relevant range of temperatures for storage, processing, and consumption. The SFC profile and values of the fat phase may be measured according to the standard method AOCS Cd 16b-93.

In the standard method AOCS Cd 16b-93, the solid fat content (SFC) (SFC10 measured at 10 °C, SFC20 measured at 20 °C, SFC30 measured at 30 °C, SFC35 measured at 35 °C, SFC40 measured at 40 °C) of the fat phase is measured via pulsed-field gradient NMR spectroscopy, as known in general to the person skilled in the art. The preferred stabilization profile to be used is described in the experimental section below. Typically, the fat phase is first heated to a temperature of 80 °C and maintained at said temperature for about 15 minutes, subsequently the fat phase is maintained at 60 °C or higher for at least 10 minutes, subsequently the fat phase is maintained at 0 °C for about 1 hour, and then at the measurement temperature (e.g., 10-40 °C) for about 30 minutes. The solid fat content (%) determined by the low resolution NMR is defined as the ratio between the response received from the hydrogen nuclei in the solid phase and the response coming from all hydrogen nuclei in the sample. No correction is applied for variations in the proton density between solid and liquid phase.

In some preferred embodiments, the fat-continuous emulsion may have a solid fat content (SFC10) value of at least 5.0% to at most 40.0%, or at least 5.0% to at most 30.0%, or at least 5.0% to at most 25.0% at 10 °C and/or a solid fat content (SFC20) value of at least 5.0% to at most 30.0%, or at least 5.0% to at most 25.0%, or at least 5.0% to at most 20.0% at 20 °C and/or a solid fat content (SFC35) value of at most 15.0%, or at most 10.0%, or at most 7.0%, or at least 0.5% to at most 7.0% at 35 °C, as determined by the standard method AOCS Cd 16b-93.

In some embodiments, the fat phase is essentially free or free from hydrogenated triglycerides.

Essentially free or free from hydrogenated triglycerides means that a triglyceride comprised in the fat phase has not undergone any hydrogenation treatment. This entails both fats and oils as well as blends and esterified blends of fats and oils, and any fractions thereof, but does not exclude triglycerides produced from hydrogenated fatty acids.

In some embodiments, the fat phase is essentially free or free from tropic fats and oils selected from the group comprising or consisting of palm oil, coconut oil, shea butter, coconut butter, allanblackia oil, pentadesma butter, and fractions and combinations thereof.

In some embodiments, the fat phase may comprise a low amount of saturated C12 fatty acid residues (C12:0), relative to the total amount of fatty acid residues in the fat phase. In some preferred embodiments, the fat phase may comprise at most 5.0 wt.%, or at most 4.0 wt.%, or at most 3.0 wt.%, or at most 2.5 wt.%, or at most 2.0 wt.%, or at most 1.5 wt.%, or at most 1.0 wt.%, of saturated C12 fatty acid residues (C12:0), relative to the total weight of all fatty acid residues in the fat phase.

In some embodiments, the fat phase according to the present invention may be further restricted in the amount of trans fatty acid (TFA) residues, relative to the total amount of fatty acid residues in the fat phase, which may benefit the nutritional profile. In some preferred embodiments, the fat phase may comprise at most 3.0 wt.%, or at most 2.5 wt.%, or at most 2.0 wt.%, or at most 1.5 wt.%, or at most 1.0 wt.% of trans fatty acid residues (TFA), relative to the total weight of all fatty acid residues in the fat phase.

In some preferred embodiments, the fat phase may comprise at least 7.0 wt.% to at most 60.0 wt.%, or at least 7 wt.% to at most 55.0 wt.%, or at least 7.0 wt.% to at most 50.0 wt.%, or at least 10.0 wt.% to at most 45.0 wt.%, or at least 10.0 wt.% to at most 40.0 wt.% of the hardstock, relative to the total weight of the fat phase.

The terms "hardstock", "structuring fat" or "solid fat", as used herein interchangeably, refers to a fat which is solid at room temperature or a blend of fats that are each solid at room temperature, formulated to provide structural integrity and texture to an emulsion or a fat and/or oil-containing food product comprising said emulsion. The term also encompasses interesterified blends of one or more fats or interesterified blends of one or more fats and one or more liquid oils, as well as transesterified blends of one or more fats and/or one or more liquid oils and a fatty acid mixture, wherein said interesterified and transesterified blends are solid at room temperature.

It has been found by the present inventors that the specific hardstock as defined herein allows to reduce the amount of saturated C12 (C12:0) fatty acid residues and saturated C16 (C16:0) fatty acid residues in the hardstock, which is beneficial for the nutritional profile of the hardstock and the emulsion.

Major sources of C12:0 and C16:0 are palm oil, palm kernel oil and coconut oil. The present invention therefore has the advantage that the use of these tropical oils or fats can be avoided in the preparation of the hardstock.

In some embodiments, the hardstock is essentially free or free from tropical fats and oils such as palm oil, coconut oil, shea butter, coconut butter, allanblackia oil, pentadesma butter, and fractions and/or combinations thereof.

In preferred embodiments, the hardstock may comprise at most 14.0 wt.%, or at most 12.0 wt.%, or at most 10.0 wt.%, or at most 8.0 wt.%, or at most 5.0 wt.%, of saturated C16 fatty acid residues (C16:0), relative to the total weight of all fatty acid residues in the hardstock.

In preferred embodiments, the hardstock may comprise at most 4.0 wt.%, or at most 3.0 wt.%, or at most 2.5 wt.%, or at most 2.0 wt.%, or at most 1.5 wt.%, or at most 1.0 wt.%, of saturated C12 fatty acid residues (C12:0), relative to the total weight of all fatty acid residues in the fat phase.

In preferred embodiments, the hardstock may comprise at most 2.5 wt.%, preferably at most 2.0 wt.%, preferably at most 1.5 wt.%, preferably at most 1.0 wt.% of trans fatty acid residues (TFA).

It has been found that the presence of at least 35.0 wt.% to at most 55.0 wt.%, relative to the total weight of all fatty acid residues in the hardstock, of saturated C18 fatty acid residues (C18:0), in the hardstock provides a favorable structure to the emulsion according to the present invention in terms of consistency and texture, without compromising the nutritional quality of said emulsion. Unlike the majority of other saturated fatty acid residues, stearic acid (C18:0) has a neutral effect on the level of cholesterol in the blood. However, a content higher than about 55 wt.% of C18:0, relative to the total weight of all fatty acid residues in the hardstock, was found to provide a nonspreadable product with an undesirable wax-type mouthfeel. This is further determinable by, for instance, microscopy.

In some preferred embodiments, the hardstock may comprise, relative to the total weight of all fatty acid residues in the hardstock at least 20.0 wt.%, or at least 22.5 wt.%, or at least 25.0 wt.%, or at least 27.5 wt.%, or at least 30.0 wt.%, or at least 32.5 wt.%, or at least 35.0 wt.% of mono-unsaturated C18 fatty acid residues (C18:1).

In some preferred embodiments, the hardstock may comprise, relative to the total weight of all fatty acid residues in the hardstock at most 60.0 wt.%, or at most 55.0 wt.% of mono-unsaturated C18 fatty acid residues (C18:1).

In some preferred embodiments, the hardstock may comprise, relative to the total weight of all fatty acid residues in the hardstock at least 0.5 wt.%, or at least 1.0 wt.%, or at least 5.0 wt.%, or at least 7.5 wt.%, or at least 10.0 wt.% of poly-unsaturated C18 fatty acid residues (C18:2 and C18:3).

In some preferred embodiments, the hardstock may comprise, relative to the total weight of all fatty acid residues in the hardstock at most 35.0 wt.%, or at most 30.0 wt.% of poly-unsaturated C18 fatty acid residues (C18:2 and C18:3).

In some preferred embodiments, the hardstock may comprise, relative to the total weight of all fatty acid residues in the hardstock at least 20.0 wt.% to at most 60.0 wt.%, or at least 25.0 wt.% to at most 60.0 wt.%, or at least 27.5 wt.% to at most 60.0 wt.%, or at least 30.0 wt.% to at most 60.0 wt.%, or at least 30.0 wt.% to at most 55.0 wt.%, or at least 35.0 wt.% to at most 55.0 wt.% of mono-unsaturated C18 fatty acid residues (C18:1).

In some preferred embodiments, the hardstock may comprise, relative to the total weight of all fatty acid residues in the hardstock at least 0.5 wt.% to at most 35.0 wt.%, or at least 1.0 wt.% to at most 35.0 wt.%, or at least 5.0 wt.% to at most 35.0 wt.%, or at least 7.5 wt.% to at most 35.0 wt.%, or at least 10.0 wt.% to at most 35.0 wt.%, or at least 10.0 wt.% to at most 30.0 wt.% of poly-unsaturated C18 fatty acid residues (C18:2 and C18:3).

In some preferred embodiments, the hardstock may comprise a weight ratio of mono-unsaturated C18 fatty acid residues to poly-unsaturated C18 fatty acid residues (C18:1/(C18:2+C18:3)) of at least 2.0, or at least 2.5, or at least 3.0, or at least 3.5, or at least 4.0, or at least 4.5, or at least 5.0, or at least 5.5 or at least 6.0, or at least 7.0, or at least 8.0, or at least 9.0, at least 10.0, or at least 15.0. It should be understood that the aforementioned weight ratio refers to the ratio of the weight percentage of mono-unsaturated C18 fatty acid residues and the weight percentage of poly-unsaturated C18 fatty acid residues, wherein the weight ratios are calculated relative to the total weight of all fatty acid residues in the hardstock.

Experimentation has surprisingly revealed that the presence of a too high amount of poly-unsaturated C18 fatty acid residues (C18:2 and C18:3) in the hardstock, as described above, directly gives rise to an emulsion with undesirable properties. In particular, at lower hardstock concentrations, the emulsions break and release water during spreading. On the other hand, higher hardstock concentrations result in hard and scrapy emulsions with insufficient flavour release. An optimized balance between mono-unsaturated C18 fatty acid residues to poly-unsaturated C18 fatty acid residues as defined herein therefore has the advantage that a spread product may be prepared with improved functional properties and stability.

It has been found that the specific hardstock in the emulsion according to the invention containing a content of at least 5.0 wt.%, relative to the total weight of the hardstock, of higher-melting triglycerides, in particular SatSatSat triglycerides allows for the production of fat and/or oil-containing food products such as spread products with desirable spreading behavior.

According to an embodiment, the hardstock, as described above, preferably has a melting point of at least 35 °C, or at least 37.5 °C, or at least 40.0 °C, or at least 42.5 °C, or at least 45.0 °C. This melting point can be determined by standard methods generally known to the person skilled in the art, the melting point is preferably determined according to the standard AOCS method, Cc 3-25.

According to certain embodiments, the hardstock, as described above, preferably has a melting point of less than 65 °C, more preferably a melting point of less than 60 °C. This melting point can be determined by standard methods generally known to the person skilled in the art, the melting point is preferably determined according to the standard AOCS method, Cc 3-25.

In some preferred embodiments, the hardstock may comprise at least 5.0 wt.% and at most 25.0 wt.%, or at least 5.0 wt.% and at most 22.5 wt.%, or at least 5.0 wt.% and at most 20.0 wt.%, or at least 5.5 wt.% and at most 20.0 wt.%, or at least 6.0 wt.% and at most 20.0 wt.%, or at least 6.0 wt.% and at most 17.5 wt.%, or at least 6.0 wt.% and at most 15.0 wt.%, or at least 6.5 wt.% and at most 15.0 wt.% of SatSatSat triglycerides, relative to the total weight of the hardstock. The term "SatSatSat triglyceride", as used herein, refers to a triglyceride having three saturated fatty acid chains.

With regard to spread products, the presence of SatSatSat triglycerides, in particular SatSatSat triglycerides rich in stearic acid and/or palmitic acid, is usually avoided because of the adverse effects on spreadability and mouthfeel. However, it has surprisingly been found that an optimal content of trisaturated (SatSatSat) triglycerides as defined herein provides an emulsion with optimal functionality in terms of plasticity and texture, without adversely affecting organoleptic properties.

In some preferred embodiments, the hardstock may comprise at least 12.0 wt.% to at most 35.0 wt.%, or at least 15.0 wt.% to at most 35.0 wt.%, or at least 17.0 wt.% to at most 35.0 wt.%, or at least 20.0 wt.% to at most 35.0 wt.% of SSO triglycerides, relative to the total weight of the hardstock, said SSO triglycerides having stearic acid (C18:0) residues at the 1-position and 2-position of the glycerol backbone, and having oleic acid (C18:1) residues at the 3-position of the glycerol backbone. The term "SSO triglyceride", as used herein, refers to a triglyceride having saturated fatty acid residues at the 1-position and 2-position of the glycerol backbone, and having unsaturated fatty acid residues at the 3-position of the glycerol backbone.

In some preferred embodiments, the hardstock may comprise a weight ratio of SSO triglycerides to SOS triglycerides (SSO/SOS) of at least 1, or at least 1.2, or at least 1.5, or at least 1.8, said SOS triglycerides having stearic acid (C18:0) residues at the 1-position and 3-position of the glycerol backbone, and having oleic acid (C18:1) residues at the 2-position of the glycerol backbone.

In some preferred embodiments, the hardstock may comprise or consist of an interesterified blend of one or more fats and one or more liquid oils.

In some embodiments, the hardstock may comprise or consist of a transesterified blend of one or more liquid oils and a fatty acid mixture.

Within the scope of the present invention, it should be understood that the interesterification or transesterification of a blend of one or more fats and one or more liquid oils or a blend of a fatty acid mixture and one or more liquid oils may be carried out according to known methods in the art. Interesterification or transesterification may be performed chemically (non-selective randomization), for example, through the use of sodium methoxide as a catalyst, and enzymatically, with optional selective and positional specificity, for example through the use of lipase. Interesterification and transesterification are known techniques for a person skilled in the field of organic chemistry and oleochemistry, with the aim of rearranging (i.e., redistributing) the fatty acids present on the glycerol base structure. The interesterification or transesterification may then be followed by one or more washing steps, one or more bleaching steps and/or deodorization steps. Preferably, the interesterification or transesterification is a chemical interesterification or transesterification with the aim of non-selectively randomizing the fatty acids in the hardstock.

In some preferred embodiments, the interesterified or transesterified blend is not subjected to a fractionation step to remove a high-melting stearin fraction.

In some preferred embodiments, at least one fat of the blend may comprise at least 80.0 wt.%, at least 85.0 wt.%, at least 90.0 wt.%, or at least 95.0 wt.% of saturated C18 fatty acid residues (C18:0), relative to the total weight of fatty acid residues in the fat. A fat comprising at least 80.0 wt.%, at least 85.0 wt.%, at least, at least 90.0 wt.%, or at least 95.0 wt.% of C18:0 may be obtained, for example but without limitation, by full hydrogenation of sunflower oil or rapeseed oil, or by reacting an excess of a fatty acid mixture rich in stearic acid with glycerol as known to the skilled person.

In some embodiments, the fatty acid mixture of the blend may comprise at least 80.0 wt.%, at least 85.0 wt.%, at least 90.0 wt.%, or at least 95.0 wt.% of saturated C18 fatty acids (C18:0), relative to the total weight of fatty acids in the fatty acid mixture.

In some preferred embodiments, the blend, in particular the one or more fats and/or the one or more liquid oils of the blend, may comprise at most 10.0 wt.%, or at most 5.0 wt.% of shea fat and/or at most 10.0 wt.%, or at most 5.0 wt.% of cocoa fat.

In some preferred embodiments, the blend may comprise one or more liquid oils selected from the group consisting of: sunflower oil, high oleic sunflower oil, rapeseed oil, soybean oil, olive oil, and fractions and/or combinations thereof, as well as varieties of these oils.

In some preferred embodiments, the blend may comprise an oil having an increased oleic acid residue content, such as high oleic sunflower oil, preferably the oil comprising at least 65.0 wt.%, or at least 70.0 wt.%, or at least 75.0 wt.%, or at least 80.0 wt.% of oleic acid residues, relative to the total weight of all fatty acid residues in the oil. Suitable, non-limiting examples of oils having an increased oleic acid residue content include high oleic sunflower oil, rapeseed oil and olive oil. In particular embodiments, the blend comprises high oleic sunflower oil having at least 65.0 wt.%, or at least 70.0 wt.%, or at least 75.0 wt.%, or at least 80.0 wt.% of oleic acid residues, relative to the total weight of all fatty acid residues in the high oleic sunflower oil.

In some preferred embodiments, the blend may comprise an oil having an increased oleic acid residue content, such as high oleic sunflower oil, preferably comprising at least 65.0 wt.%, or at least 70.0 wt.%, or at least 75.0 wt.%, or at least 80.0 wt.% of oleic acid residues, relative to the total weight of all fatty acid residues in the oil, and one or more liquid oils selected from the group consisting of: sunflower oil, rapeseed oil, soybean oil, olive oil, and fractions and/or combinations thereof, as well as varieties of these oils. In particular embodiments, the blend comprises high oleic sunflower oil, and one or more liquid oils selected from the group consisting of: sunflower oil, rapeseed oil, soybean oil, olive oil, and fractions and/or combinations thereof, as well as varieties of these oils.

In some preferred embodiments, the hardstock is essentially free from hydrogenated triglycerides.

In some embodiments, the hardstock may comprise at most 10.0 wt.%, or at most 5.0 wt.% of shea fat and/or at most 10.0 wt.%, or at most 5.0 wt.% of cocoa fat.

According to the present invention, the fat phase comprises at least one liquid oil in addition to the hardstock.

Advantageously, the structural and stable properties of the emulsion of the invention may be achieved with a reduced need for structuring fats or hardstock in the fat phase (60.0 wt.% or less structuring fat or hardstock, relative to the weight of the fat phase). Advantageously, the fat phase can incorporate more liquid oil, leading to an improved nutritional profile.

In some preferred embodiments, the fat phase may comprise at least 40.0 wt.%, or at least 45.0 wt.%, or at least 50.0 wt.%, or at least 55.0 wt.%, or at least 60.0 wt.%, or at least 65.0 wt.% of at least one liquid oil, relative to the total weight of the fat phase.

In some preferred embodiments, the fat phase may comprise at least one liquid oil selected from the group consisting of rapeseed oil, canola oil, sunflower oil, high oleic sunflower oil, soybean oil, linseed oil, olive oil, corn oil, safflower oil, sesame oil, peanut oil, camelina oil, and fractions and/or combinations thereof, as well as varieties of these oils.

In particular embodiments, the edible fat-continuous emulsion comprises an aqueous phase and between 18.0 wt.% and 50.0 wt.% such as about 40 wt.% of a fat phase, relative to the total weight of the emulsion;
- wherein the fat phase comprises at least one liquid oil and between 10.0 wt.% and 40.0 wt.% of a hardstock, relative to the total weight of the fat phase;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 1.5;
- wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a a volume weighted average water droplet size (D_{3,3}) of at most 10.0 µm, as determined by pulsed-field gradient NMR.

In further particular embodiments, the edible fat-continuous emulsion comprises an aqueous phase and between 18.0 wt.% and 50.0 wt.% such as about 40 wt.% of a fat phase, relative to the total weight of the emulsion;
- wherein the fat phase comprises at least one liquid oil and between 10.0 wt.% and 40.0 wt.% of a hardstock, relative to the total weight of the fat phase;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 8.0, preferably at least 10.0;
- wherein the hardstock comprises at least 6.5 wt.% and at most 15.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a a volume weighted average water droplet size (D_{3,3}) of at most 10.0 µm, as determined by pulsed-field gradient NMR.

In yet further particular embodiments, the edible fat-continuous emulsion comprises an aqueous phase and between 18.0 wt.% and 50.0 wt.% such as about 40 wt.% of a fat phase, relative to the total weight of the emulsion;
- wherein the fat phase comprises at least one liquid oil and between 10.0 wt.% and 40.0 wt.% of a hardstock, relative to the total weight of the fat phase;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 8.0, preferably at least 10.0;
- wherein the hardstock comprises at least 6.5 wt.% and at most 15.0 wt.% of SatSatSat triglycerides, relative to the total weight of the hardstock, said SatSatSat triglycerides having saturated fatty acid residues at the 1-position, 2-position, and 3-position of the glycerol backbone;
- wherein the hardstock comprises an interesterified blend of a fat comprising at least 90.0 wt.% of C18:0, relative to the total weight of fatty acid residues in the fat; an oil, such as high oleic sunflower oil, having at least 65.0 wt.%, or at least 70.0 wt.%, or at least 75.0 wt.% or at least 80% of oleic acid residues, relative to the total weight of all fatty acid residues in the oil; and optionally one or more liquid oils selected from the group consisting of sunflower oil, rapeseed oil, soybean oil, olive oil, and fractions and/or combinations thereof, as well as varieties of these oils; and
- wherein the emulsion has a a volume weighted average water droplet size (D_{3,3}) of at most 10.0 µm, as determined by pulsed-field gradient NMR.

Another aspect of the present invention relates to a method for the preparation of a fat-continuous emulsion comprising an aqueous phase and a fat phase, preferably between 15.0 and 75.0 wt.% of a fat phase, relative to the total weight of the emulsion, such as a fat-continuous emulsion according to the invention, said method comprising a step of blending the aqueous phase and the fat phase;
- wherein the fat phase comprises at least one liquid oil and at most 60.0 wt.% of a hardstock, relative to the total weight of the fat pahse;
- wherein the hardstock comprises, relative to the total weight of all fatty acid residues in the hardstock:
   - at most 5.0 wt.% of saturated C12 fatty acid residues (C12:0);
   - at most 3.0 wt.% of trans fatty acid residues (TFA);
   - at most 15.0 wt.% of saturated C16 fatty acid residues (C16:0);
   - at least 35.0 wt.% to at most 55.0 wt.% of saturated C18 fatty acid residues (C18:0);
   - a weight ratio of mono-unsaturated C18 fatty acid residues to poly-unsaturated C18 fatty acid residues (C18:1/(C18:2+C18:3)) of at least 1.5;
- wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a volume weighted average water droplet size (D_{3,3}) of at most 10.0 µm, as determined by pulsed-field gradient NMR.

It should be noted that (preferred) embodiments of the fat-continuous emulsion according to an aspect of the invention are also (preferred) embodiments of the method for preparing a fat-continuous emulsion according to an aspect of the invention and vice versa. In addition, any advantages of the fat-continuous emulsion as disclosed herein apply *mutatis mutandis* to the method for preparing a fat-continuous emulsion as disclosed herein.

The blending or mixing of the aqueous phase and the fat phase may be carried out at a temperature at which the fat phase is at least partly, preferably entirely, in a molten state.

In some preferred embodiments, the blending of the aqueous phase and the fat phase may be carried out at a temperature of at least 30 °C to at most 80 °C, or at least 35 °C to at most 80 °C, or at least 40 °C to at most 80 °C.

In some embodiments, the aqueous phase and (parts of) the fat phase may be at a different temperature at blending. In preferred embodiment, the fat phase is entirely in a molten state at blending.

In embodiments, blending may comprise dispersing the aqueous phase in the fat phase. In other embodiments, blending may comprise dispersing the fat phase in the aqueous phase. In certain embodiments, wherein the blending comprises dispersing the fat phase in the aqueous phase, the method may further comprise a step of conducting the blend through an inversion unit where inversion to a fat-continuous emulsion takes place.

It should be understood that the step of blending the aqueous phase and the fat phase may refer to mixing of the fat phase, which may be first prepared in its entirety prior to mixing with the aqueous phase; as well as mixing parts of the fat phase and the aqueous phase or parts of the fat phase and parts of the aqueous phase. For instance, in embodiments, the at least one liquid oil of the fat phase may be mixed with the aqueous phase, and said mixture may be subsequently mixed with the hardstock, which is preferably at least partly, preferably entirely, in a molten state.

In certain embodiments, the method may further comprise a step of preparing the fat phase by mixing at most 60.0 wt.% of a hardstock with at least one liquid oil, and optionally fat soluble substances such as emulsifiers, sterolesters, stanolesters, colorants, aromas, antioxidants, and/or vitamins.

In certain embodiments, the method may further comprise a step of preparing the aqueous phase by mixing water, and optionally water soluble substances such as emulsifiers, vegetable and/or animal protein components or a protein component derived from fungi, salts, vitamins, aromas, acidity regulators, preservatives, starch and other thickeners.

In some preferred embodiments, the method may further comprise a step of preparing at least a part of the hardstock by enzymatic or chemical interesterification, preferably chemical interesterification, of a blend of one or more fats and one or more liquid oils.

In some preferred embodiments, at least one fat of the blend may comprise at least 80.0 wt.%, at least 85.0 wt.%, at least, preferably at least 90.0 wt.%, or at least 95.0 wt.%, of saturated C18 fatty acid residues (C18:0), relative to the total weight of fatty acid residues in the fat.

In embodiments, the method may further comprise a step of preparing at least a part of the hardstock by enzymatic or chemical transesterification, preferably chemical transesterification, of a blend of one or more liquid oils and a fatty acid mixture.

In some preferred embodiments, the fatty acid mixture may comprise at least 80.0 wt.%, at least 85.0 wt.%, at least, preferably at least 90.0 wt.%, or at least 95.0 wt.%, of saturated C18 fatty acids (C18:0), relative to the total weight of fatty acids in the fatty acid mixture.

In embodiments, the blend of one or more fats and one or more liquid oils or the blend of one or more liquid oils and a fatty acid mixture may comprise one or more liquid oils selected from the group consisting of: sunflower oil, high oleic sunflower oil, rapeseed oil, soybean oil, olive oil, and fractions and/or combinations thereof, as well as varieties of these oils.

In preferred embodiments, the blend of one or more fats and one or more liquid oils or the blend of one or more liquid oils and a fatty acid mixture comprises at least one oil having an increased oleic acid residue content, such as high oleic sunflower oil, preferably the oil comprising at least 60.0 wt.%, or at least 65.0 wt.%, or at least 70.0 wt.%, or at least 75.0 wt.% or at least 80.0 wt.% of oleic acid residues, relative to the total weight of all fatty acid residues in the oil. In certain embodiments, the blend may comprise high oleic sunflower oil and optionally one or more liquid oils selected from the group consisting of: sunflower oil, rapeseed oil, soybean oil, olive oil, and fractions and/or combinations thereof, as well as varieties of these oils.

In some preferred embodiments, at least one oil of the blend may comprise a ratio of mono-unsaturated C18 fatty acid residues to poly-unsaturated C18 fatty acid residues (C18:1/(C18:2+C18:3)) of at least 1.5.

In some preferred embodiments, the blend of one or more fats and one or more liquid oils may comprise at least 25.0 wt.%, or at least 30.0 wt.%, or at least 35.0 wt.%, or at least 40.0 wt.%, or at least 45.0 wt.%, or at least 50.0 wt.% of the one or more fats, relative to the total weight of the blend.

In some preferred embodiments, the blend of one or more liquid oils and a fatty acid mixture may comprise at least 25.0 wt.%, or at least 30.0 wt.%, or at least 35.0 wt.%, or at least 40.0 wt.%, or at least 45.0 wt.%, or at least 50.0 wt.% of the fatty acid mixture, relative to the total weight of the blend.

In some preferred embodiments, the blend of one or more fats and one or more liquid oils or the blend of one or more liquid oils and a fatty acid mixture may comprise at most 40.0 wt.%, or at most 55.0 wt.%, or at most 60.0 wt.%, or at most 65.0 wt.%, or at most 70.0 wt.%, or at most 75.0 wt.% of the one or more liquid oils, relative to the total weight of the blend.

In some preferred embodiments, the chemical interesterification or transesterification may be performed at a temperature of at least 80 °C to at most 240 °C, or at least 100 °C to at most 240 °C, or at least 100 °C to at most 220 °C, or at least 100 °C to at most 200 °C, or at least 110 °C to at most 200 °C, preferably without a catalyst.

In some embodiments, chemical interesterification or transesterification may be performed in the presence of a catalyst, preferably a base catalyst, such as alkali metal hydroxides or alkali metal alkoxides.

In some embodiments, the base catalyst may be selected from the group consisting of sodium hydroxide, sodium methoxide, sodium ethoxide, potassium hydroxide, potassium methoxide, potassium ethoxide and mixtures thereof.

In some preferred embodiments, the chemical interesterification or transesterification may be performed in less than 24 hours, or less than 20 hours, or less than 18 hours, or less than 15 hours, or less than 12 hours, or less than 10 hours, or less than 5 hours.

In certain embodiments, the method further comprises a step of processing the blend (or inverted blend) of the fat phase and the aqueous phase in a processing line comprising at least one pump, at least one cooling unit and/or at least one working unit. In certain embodiments, the processing line comprises at least one pump and at least one working unit. In certain embodiments, the processing line comprises at least one pump, at least one cooling unit and at least one working unit.

The method steps above are typically carried out in a margarine production line that may allow the ingredients, i.e., components for preparing a fat-continuous emulsion as described herein, to be mixed, heated, cooled, and mechanically processed, as known to the skilled person.

In some preferred embodiments, the processing line may comprise at least one pump, and one or more of an A unit, a B unit, and/or a C unit. The terms "A unit", "B unit", and "C unit" are well-known to a person skilled in the art. The number and order of the A unit, the B unit, and/or the C unit, may be varied as known to the skilled person. Moreover, the processing line may be modified according to the intended production capacity. For instance, the number of cooling units may vary from 1 to 10.

In some preferred embodiments, the at least one cooling unit may comprise an A unit, also known as a scraped surface heat exchanger. The A unit or scraped surface heat exchanger is configured for cooling the blend of the aqueous phase and the fat phase under high shear in the processing line. The A unit may ensure a rapid cooling and crystallization of the fat phase, and in particular the hardstock, comprised in the blend during its residence time in the A unit.

In some preferred embodiments, the at least one cooling and/or working unit may comprise a C unit, also known as a crystallizer or rotary pin worker. The C unit, crystallizer or rotary pin worker is configured for carrying out a crystallization step, in which rotating pins perform a mechanical operation.

In some embodiments, the blend of the fat phase and the aqueous phase is cooled to a temperature between 4.0 °C and 15.0 °C, or between 5.0 °C and 15.0 °C, or between 5.0 °C and 13.0 °C. In certain embodiments, the blend of the fat phase and the aqueous phase is cooled to a temperature between 4.0 °C and 9.0 °C, or between 5.0 °C and 9.0 °C, or between 6.0 °C and 9.0 °C, or between 7.0 °C and 8.0 °C. In certain embodiments, the blend of the fat phase and the aqueous phase is cooled to a temperature between 10.0 °C and 15.0 °C, or between 10.0 °C and 13.0 °C, or between 10.0 °C and 12.0 °C, or between 10.0 °C and 11.0 °C.

In some embodiments, the total residence time in the at least one A unit is at least 20 seconds to at most 200 seconds, or at least 20 seconds to at most 150 seconds, or at least 20 seconds to at most 100 seconds, or at least 20 seconds to at most 75 seconds.

In some embodiments, the total residence time in the at least one C unit is at least 20 seconds to at most 250 seconds, or at least 20 seconds to at most 200 seconds, or at least 20 seconds to at most 150 seconds, or at least 20 seconds to at most 100 seconds, or at least 60 seconds to at most 250 seconds, or at least 60 seconds to at most 200 seconds, or at least 60 seconds to a at most 150 seconds, or at least 60 seconds to at most 100 seconds.

Another aspect of the present invention relates to a fat-continuous emulsion obtained or obtainable by means of the method for preparing a fat-continuous emulsion as disclosed herein.

Another aspect of the present invention relates to a spread product comprising a fat-continuous emulsion according to an aspect of the present invention or a fat-continuous emulsion obtained or obtainable by means of a method for the preparation of a fat-continuous emulsion according to an aspect of the invention.

It should be noted that (preferred) embodiments of the fat-continuous emulsion according to an aspect of the invention, and the method for preparing a fat-continuous emulsion according to an aspect of the invention are also (preferred) embodiments of the spread product according to an aspect of the invention and vice versa. In addition, any advantages of the fat-continuous emulsion as disclosed herein apply *mutatis mutandis* to the spread product as disclosed herein.

In some preferred embodiments, the spread product may comprise further ingredients, preferably emulsifiers, water soluble components and/or fat soluble components.

Non-limiting examples of emulsifiers include mono- and diglycerides of fatty acids, lecithin, polyglycerol esters, polyglycerol polyricinoleate (PGPR), mono- and diglycerides of fatty acids esterified with acetic acid, citric acid, lactic acid, acetic acid, tartaric acid or mono- and diacetyl tartaric acid.

Non-limiting examples of water soluble components other than the emulsifiers are vegetable and/or animal protein components or a protein component derived from fungi, salts, vitamins, aromas, acidity regulators, preservatives, starch and other thickeners.

Non-limiting examples of fat soluble components other than the emulsifiers include sterolesters, stanolesters, colorants, aromas, antioxidants, and vitamins.

In some preferred embodiments, the spread product comprises at most 8.0 wt.% of these additional ingredients, as described above, or at most 5.0 wt.%, or at most 3.0 wt.%, relative to the total weight of the spread product.

In some preferred embodiments, the spread product is essentially free or free of components of animal origin.

Another aspect of the present invention relates to the use of a fat-continuous emulsion according to an aspect of the invention or a spread product according to an aspect of the invention as a table spread, or as a baking or frying margarine.

The invention is illustrated but not limited by the following examples.

### EXAMPLES

### Methodology

The following describes the materials and methods used for all examples unless otherwise stated.

The **Solid Fat Content (SFC)** and associated SFC values (SFC10, SFC20, SFC30, SFC35, SFC40) was determined according to the standard method AOCS Cd 16b-93. In particular, the solid fat content (SFC) (SFC10 measured at 10 °C, SFC20 measured at 20 °C, SFC30 measured at 30 °C, SFC35 measured at 35 °C, SFC40 measured at 40 °C) of the hardstocks and the fat phases was measured via pulsed- NMR spectroscopy following a stabilization procedure, as known to the person skilled in the art. Briefly, the fat phase was first heated to a temperature of 80 °C and maintained at said temperature for 15 minutes, subsequently the fat phase was maintained at 60 °C or higher for at least 10 minutes, subsequently the fat phase was maintained at 0 °C for about 1 hour, and then at the measurement temperature (e.g., 10-40 °C) for 30 minutes. The solid fat content (%) determined by the low resolution NMR is defined as the ratio between the response received from the hydrogen nuclei in the solid phase and the response coming from all hydrogen nuclei in the sample. No correction was applied for variations in the proton density between solid and liquid phase.

The **composition of fatty acid residues** comprised in the hardstock and the fat phase of the emulsions was determined according to standard method AOCS Official Method Ce 1f-96, Revised 2017.

**Triglyceride (TAG) compositions** of hardstocks and fat phases were determined according to AOCS official method Ce-5C-93. This HPLC method is used for the separation, identification and quantification of triglycerides in fats and oils. The procedure is standardized in such a manner that triglycerides elute in a sequence with increasing 'equivalent carbon number (ECN)'. This parameter is expressed by the following formula: ECN = number of carbon atoms - 2 × number of double bonds. Further identification of the different triglycerides is based on their retention time. Each peak includes triglycerides having the same fatty acids in different positions, e.g. SSO is the same signal peak as SOS and some peaks are difficult to separate, e.g. POP, PPO, SLP, PSL and SPL are in the same signal peak (indicated as PPO/PSL). SatSatSat content was calculated from the TAG species results.

The **crystalline fat content** of the emulsions was determined after stabilization and equilibration of the emulsions for 48 hours at 5 °C. Subsequently, a sample was taken from the stored emulsions using a metal plunger. The sample was then transferred to a glass NMR tube and measured directly by pulsed-NMR spectroscopy at 5 °C.

The **hardness** of the emulsions was determined after stabilization of the prepared emulsions for 24 hours at 5 °C. The hardness was immediately measured after stabilization using a Brookfield CTX Texture Analyzer equipped with a cylindrical probe having a 12.7 mm diameter. After achieving a trigger force value of 2 g, the probe was pressed into the emulsion with a probe penetration rate of 2 mm/sec, over a distance of 10 mm. The required peak force was then read out, expressed in g.

The **water droplet size distribution** of the dispersed aqueous phase in the emulsions was determined via pulsed-field gradient NMR spectroscopy. The parameter D3,3 is the volume weighted mean droplet diameter and σ is the standard deviation of the logarithm of the droplet diameter.

The NMR signal (echo height) of the protons of the water in the emulsions was measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure - which uses the lognormal droplet size distribution - the parameters of the water droplet size distribution D3,3 (volume weighed geometric mean diameter) and σ (distribution width) were calculated. A Bruker magnet with a field of 0.47 Tesla (20 MHz proton frequency) with an air gap of 25 mm was used (NMR Spectrometer Bruker Minispec MQ20 Grad, ex Bruker Optik GmbH.DE).

**Spreadability** of the emulsions was tested according to a standardized method. In particular, a standard kitchen knife was used to spread a small amount of the emulsions on to white cardboard. The appearance of the emulsion after spreading was rated on a standardized scale. A score of 1 represents a homogeneous and smooth product without any defects, a score of 2 refers to a smooth product but with slight heterogeneities, typically a product where some small water bubbles are visible, a score of 3 refers to a coarse product where many water bubbles or several bigger water bubbles are present. Some release of free water is possible, but the spreaded sample typically remains fat-continuous. A score of 4 refers to products that are macroscopically heterogeneous at the start of spreading or become macroscopically heterogeneous during spreading with clear release of water. This behavior is generally referred to as breaking of the emulsion.

**Fat matrix defects.** The texture of the emulsion after spreading was assessed for matrix defects. These were evaluated as follows:
- Absent: no fat matrix defects, smooth structure after spreading
- Sandy: acceptable, but visible small (0,5 mm) entities but cannot be felt by the finger.
- Grainy: larger (> 0,5 mm) separate entities. These structure can typically be felt by finger
**Temperature cycling stability** tests of the emulsions were performed after storing the emulsions for 24 hours at 5 °C. The emulsion was subsequently stored at about 25 °C for 24 hours, followed by further storage at about 10 °C for 24 hours.

After this temperature cycling, the sample was spread and rated according to the spreadability method above.

**Taste evaluation** of the emulsions was performed by a trained test panel. The panel members were asked to give a score between 0 and 3, with the scores given the following meaning:
- 0 = easy-melting; leaves no noticeable greasy film on the tongue, almost immediate release of strong salty taste
- 1 = slightly slower melting, but no clear grease film, delayed release of strong salty taste
- 2 = leaves a noticeable grease film, but with detection of mild salty taste
- 3 = very slow melting, very waxy, no salty taste.

### Preparation of hardstocks

Different hardstocks were prepared by chemical interesterification using sodium methoxide as a catalyst. Prior to addition of the catalyst to the respective blend, said blend was first heated to 110 °C under vacuum (about 1 mbar) in a dedicated container. Next, catalyst (0.15% w/w of sodium methoxide) was added and the resulting mixture was kept at 110 °C under vacuum for about 1 hour. After completion of the reaction, the mixture was cooled to a temperature below 100 °C. After cooling, the catalyst was inactivated by breaking the vacuum and repeatedly washing the mixture with water to a neutral pH. The obtained crude hardstock was dried, bleached, and then deodorized prior to use.

The ingredients used to prepare the hardstocks are all commercially free available compounds.

### Comparative hardstock A

Hardstock A was produced as follows. A blend was prepared by mixing 47.5 wt.% of a fat (SC1), consisting essentially of saturated triglycerides, with a composition of fatty acid residues of 91 wt.% C18:0; 6 wt.% C16:0; 0.8 wt.% C20:0; 0.3 wt.% C22:0, and 52,5 wt.% of standard sunflower oil. The blend thus obtained was then chemically interesterified using sodium methoxide as a catalyst as described above. Then, the interesterified mixture was refined in order to obtain hardstock A.

### Hardstock B

Hardstock B was produced as follows. A blend was prepared by mixing 50.0 wt.% of fat SC1 and 50.0 wt.% of high oleic sunflower oil. The blend thus obtained was then chemically interesterified using sodium methoxide as a catalyst as described above. Then, the interesterified mixture was refined in order to obtain hardstock B.

### Hardstock C

Hardstock C was produced as follows. A blend was prepared by mixing 40.0 wt.% of fat SC1, having the composition as described for hardstock A above, and 60.0 wt.% of high oleic sunflower oil. The blend thus obtained was then chemically interesterified using sodium methoxide as a catalyst as described above. Then, the interesterified mixture was refined in order to obtain hardstock C.

The composition of comparative hardstock A, hardstock B, and hardstock C is summarized in Table 1 below.

**Table 1: Composition and characterization of comparative hardstock A, hardstock B, and hardstock C. Fatty acid content is expressed in wt.% relative to the total weight of fatty acid residues in the hardstock; triglyceride content is expressed in wt.% relative to the total weight of the hardstock. C12:0: lauric acid; C14:0: myristic acid; C16:0: palmitic acid; C18:0: stearic acid; C18:1: oleic acid; C18:2 linoleic acid; C18:3: linolenic acid; SatSatSat: trisaturated triglyceride.**

| | Comparative hardstock A | Hardstock B | Hardstock C | |
|---|---|---|---|---|
| SC1 | 47.5 | 50 | 40 | |
| sunflower oil | 52.5 | | | |
| high oleic sunflower oil | | 50 | 60 | |
| Fatty acid composition (%) | | | | |
| C12:0 | <0.5 | <0.5 | <0.5 | |
| C14:0 | <0.5 | <0.5 | <0.5 | |
| C16:0 | 8.0 | 5.5 | 4.9 | |
| C18:0 | 43.0 | 46.2 | 37.5 | |
| C18:1 | 17.2 | 41.0 | 51.1 | |
| C18:2 | 28.0 | 3.5 | 3.9 | |
| C18:3 | <0.5 | <0.5 | <0.5 | |
| C18:1/(C18:2+C18:3) | 0.6 | 11.1 | 12.5 | |
| Total trans fatty acids (TFA) | <1.0 | <1.0 | <1.0 | |
| SFC | | | | |
| 10°C | 46 | 53 | 42 | |
| 20°C | 33 | 47 | 37 | |
| 25°C | 27 | 43 | 27 | |
| 30°C | 23 | 31 | 20 | |
| 35°C | 18 | 23 | 14 | |
| Carbon number triglyceride composition | | | | ECN |
| LLO | 5.3 | 0.2 | 0.6 | **44** |
| SLL/PLO | 16.5 | 0.9 | 1 | **46** |
| LOO | 3.5 | 2.4 | 3.5 | |
| OOO | 0.7 | 9.4 | 16.2 | **48** |
| POO/SOL | 13.9 | 8.6 | 8.8 | |
| PPO/PSL | 7.0 | 1.2 | 1 | |
| PPP | 0.5 | 1.1 | 0.2 | |
| SOO | 2.9 | 27.7 | 28.8 | **50** |
| PSO/SSL | 20.6 | 9.3 | 7.5 | |
| PPS | 0.7 | 0.4 | 0.3 | |
| SSO | 8.8 | 27.7 | 21 | **52** |
| PSS | 4.9 | 3.2 | 2.4 | |
| SSS | 8.1 | 9.0 | 6.3 | **54** |
| SatSatSat | 14.2 | 14.2 | 9.2 | |

### Preparation of fat phases

Fat phases were prepared by fully melting the hardstocks (comparative hardstock A and hardstocks Band C) at a temperature of 75°C, and mixing the respective melted hardstocks with rapeseed oil, unsaturated monoglycerides and fat soluble vitamins flavours and colorants in the amounts indicated in Table 2.

**Table 2: Composition and characterization of comparative fat phases A1 and A2, and fat phases B1, B2 and C1. The amounts of the ingredients are expressed in kg; wt.% are relative to the total weight of the fat phase. Fatty acid content is expressed in wt.% relative to the total weight of fatty acid residues in the fat phase; triglyceride content is expressed in wt.% relative to the total weight of the fat phase. C12:0: lauric acid; C14:0: myristic acid; C16:0: palmitic acid; C18:0: stearic acid; C18:1: oleic acid; C18:2 linoleic acid; C18:3: linolenic acid; SatSatSat: trisaturated triglyceride.**

| | comparativ e fat phase A1 | Comparati ve fat phase A2 | fat phase B1 | fat phase B2 | fat phase C1 |
|---|---|---|---|---|---|
| hardstock phase A | 14 (35%) | 12 (30%) | | | |
| hardstock phase B | | | 12 (30%) | 10 (25%) | |
| hardstock phase C | | | | | 14 (35%) |
| rapeseed oil | 24,75 (61.9%) | 26,75 (66.9%) | 26,75 (66.9%) | 28,75 (71.9%) | 24,75 (61.9%) |
| unsaturated monoglycerides | 1 (2.5%) | 1 (2.5%) | 1 (2.5%) | 1 (2.5%) | 1 (2.5%) |
| fat soluble vitamins, flavours and colorants | 0,25 (0.6%) | 0,25 (0.6%) | 0,25 (0.6%) | 0,25 (0.6%) | 0,25 (0.6%) |
| Sum total | 40 (100%) | 40 (100%) | 40 (100%) | 40 (100%) | 40 (100%) |
| | | | | | |
| Fatty acid composition (%) | | | | | |
| C12:0 | <0.5 | <0.5 | <0.5 | <0.5 | <0.5 |
| C14:0 | <0.5 | <0.5 | <0.5 | <0.5 | <0.5 |
| C16:0 | 6 | 6 | 5 | 5 | 5 |
| C18:0 | 17 | 15 | 15 | 13 | 14 |
| C18:1 | 43 | 45 | 54 | 55 | 56 |
| C18:2 | 25 | 25 | 15 | 16 | 14 |
| C18:3 | 5 | 6 | 6 | 6 | 5 |
| | | | | | |
| Saturated fatty acids (SAFA) | 23 | 21 | 20 | 18 | 19 |
| | | | | | |
| SFC | | | | | |
| 10°C | 12 | 10 | 19 | 14 | 16 |
| 20°C | 9 | 8 | 12 | 9 | 10 |
| 25°C | 7 | 6 | 9 | 6 | 7 |
| 30°C | 5 | 5 | 7 | 6 | 5 |
| 35°C | 4 | 4 | 5 | 4 | 4 |

### Preparation of aqueous phase

The aqueous phase was prepared by mixing water and 0.6 wt.% of NaCl, 1.0 wt.% of potassium alginate, and 0.2 wt.% of potassium sorbate at 55 °C. Then the mixture was acidified to a pH of 4.5 using citric acid.

### Preparation of edible, water-in-oil emulsified products/spread products

40 kg of the molten fat phases A1, A2, B1, B2 and C1 (Table 2) was mixed with 60 kg of the aqueous phase at 55 °C, to obtain warm water-in-oil emulsions comprising 40 wt.% of a fat phase and 60.0 wt.% of an aqueous phase, relative to the total weight of the emulsion.

The warm (55 °C) water-in-oil emulsions were then processed in a margarine production line. The process arrangement of the margarine production line following the high pressure pump was: AAC. The A units and the C unit respectively had a volume of 25 mL, and 150 mL. The residence time in the C-unit was 90 seconds. The rotation speed of both A units was set to 1000 rpm. The rotation speed of the C unit was set to 150 rpm. The warm water-in-oil emulsions were subjected to different process conditions, in particular cooling conditions, in the margarine production line AAC as outlined below.

### Cooling condition a

In a first approach, the cooling in both A units was set in such a way that a product temperature of 7-8 °C was reached before providing the crystallizing mixture to the C unit. The resulting spread products are identified as comparative spread product A1a, comparative spread product A2a, spread product B1a, spread product B2a, and spread product Ca containing respectively, comparative fat phase A1, comparative fat phase A2, fat phase B1, fat phase B2 and fat phase C as described in Table 2.

### Cooling condition b

In a second approach, the cooling in both A units was set in such a way that a product temperature of 10-11 °C was reached before providing the crystallizing mixture to the C unit. The resulting spread products are identified as comparative spread product A1b, comparative spread product A2b, spread product B1b, spread product B2b, and spread product Cb containing respectively, comparative fat phase A1, comparative fat phase A2, fat phase B1, fat phase B2 and fat phase C as described in Table 2.

Table 3 provides an overview of the different spread products that were produced.

**Table 3: Composition and processing conditions of the spread products.**

| example | hardstock | concentration hardstock (wt. % relative to total weight fat phase) | fat phase | process condition |
|---|---|---|---|---|
| comparative spread A1a | A | 35% | A1 | a |
| comparative spread A1b | | | | b |
| comparative spread A2a | | 30% | A2 | a |
| comparative spread A2b | | | | b |
| spread B1a | B | 30% | B1 | a |
| spread B1b | | | | b |
| spread B2a | | 25% | B2 | a |
| spread B2b | | | | b |
| spread C1a | C | 35% | C | a |
| spread C1b | | | | b |

### Evaluation of the edible, water-in-oil emulsified products/spread products

Comparative spread product A1a, comparative spread product A2a, spread product B1a, spread product B2a, spread product Ca, comparative spread product A1b, comparative spread product A2b, spread product B1b, spread product B2b, and spread product Cb were then evaluated after 1 week of storage at 5 °C or 20°C. The results are summarized in Table 4 (1 week at 5 °C) below.

**Table 4: Properties of different spread products evaluated after 1 week of storage at 5 °C.**

| Spread | D3,3 (µm) | crystalline fat (%) | Hardness (g) | Spreadability | Spreadability_{cycling} | Taste | Fat matrix defects |
|---|---|---|---|---|---|---|---|
| Comp. A1a | 3.9 | 8.5 | 866 | 1 | 1 | 3 | absent |
| Comp. A1b | 5.3 | 8.1 | 840 | 1 | 1 | 3 | absent |
| Comp. A2a | 12.8 | 6.8 | 650 | 4 | 1 | 2 | absent |
| Comp. A2b | 9.6 | 7.1 | 673 | 4 | 1 | 2 | absent |
| B1a | 6.2 | 8.3 | 540 | 1 | 1 | 2 | absent |
| B1b | 5.6 | 8.2 | 620 | 2 | 1 | 2 | absent |
| B2a | 6.1 | 6.5 | 412 | 1 | 1 | 1 | absent |
| B2b | 7 | 6.8 | 470 | 1 | 1 | 1 | absent |
| Ca | 4.3 | 7.7 | 644 | 1 | 1 | 2 | absent |
| Cb | 5.2 | 7.4 | 567 | 1 | 1 | 2 | absent |

All spread products according to embodiments of the invention (B1a, B1b, B2a, B2b, Ca, Cb) exhibited an acceptable hardness at 5°C, allowing easy spreading, whereas the hardness of comparative spread products A1a and A1b was too high at 5°C, resulting in a scrapy product. In addition, the release of the salty flavour in comparative spread products A1a and A1b was too slow, resulting in a bland taste and waxy mouthfeel. Flavour release (i.e. taste) of all the other spread products was acceptable.

Comparative spread products A2a and A2b exhibited an unacceptable spreadability at 5°C, as they broke during the evaluation. Also, for these 2 comparative spread products, the water droplets were too big, indicated by the D_{3,3} value. All other spread products had acceptable water droplet sizes, which contributes to a microbiologically and physicochemically stable spread product.

All spreads according to embodiments of the invention met the quality standards, whereas the comparative spreads failed for at least 2 of the evaluated parameters. These quality differences were unexpected since the comparative spreads and the spreads according to embodiments of the invention were processed under identical conditions and their fat phases had comparable solid fat contents.

The different spread products were also evaluated for spreadability after 1 week of storage at 20 °C. All products were rated with a spreadability score of 1.

## Claims

1. An edible fat-continuous emulsion comprising an aqueous phase and between 15.0 and 75.0 wt.% of a fat phase, relative to the total weight of the emulsion;
- wherein the fat phase comprises at least one liquid oil and at most 60.0 wt.% of a hardstock, relative to the total weight of the fat phase;
- wherein the hardstock comprises, relative to the total weight of all fatty acid residues in the hardstock:
• at most 5.0 wt.% of saturated C12 fatty acid residues (C12:0);
• at most 3.0 wt.% of trans fatty acid residues (TFA);
• at most 15.0 wt.% of saturated C16 fatty acid residues (C16:0);
• at least 35.0 wt.% to at most 55.0 wt.% of saturated C18 fatty acid residues (C18:0);
• a weight ratio of mono-unsaturated C18 fatty acid residues to poly-unsaturated C18 fatty acid residues (C18:1/(C18:2+C18:3)) of at least 1.5;
- wherein the hardstock comprises at least 5.0 wt.% of SatSatSat triglycerides, relative to the total weight of the hardstock, said SatSatSat triglycerides having saturated fatty acid residues at the 1-position, 2-position, and 3-position of the glycerol backbone; and
- wherein the emulsion has a volume weighted average water droplet size (D_{3,3}) of at most 10.0 µm, as determined by pulsed-field gradient NMR.

2. The fat-continuous emulsion according to claim 1, wherein the hardstock comprises, relative to the total weight of all fatty acid residues in the hardstock:
• at least 20.0 wt.% to at most 60.0 wt.% of mono-unsaturated C18 fatty acid residues (C18:1); and/or
• at least 0.5 wt.% to at most 35.0 wt.%, of poly-unsaturated C18 fatty acid residues (C18:2 and C18:3).

3. The fat-continuous emulsion according to claim 1 or 2, wherein the hardstock comprises a weight ratio of mono-unsaturated C18 fatty acid residues to poly-unsaturated C18 fatty acid residues (C18:1/(C18:2+C18:3)) of at least 8.0.

4. The fat-continuous emulsion according to any one of claims 1 to 3, wherein the hardstock comprises at least 6.5 wt.% and at most 15.0 wt.% of SatSatSat triglycerides, relative to the total weight of the hardstock.

5. The fat-continuous emulsion according to any one of claims 1 to 4, wherein the emulsion comprises at least 18.0 wt.% and at most 50.0 wt.% of a fat phase, relative to the total weight of the emulsion, and optionally wherein the fat phase comprises at least 10.0 wt.% to at most 40.0 wt.% of the hardstock, relative to the total weight of the fat phase.

6. The fat-continuous emulsion according to any one claims 1 to 5, wherein the hardstock comprises or consists of an interesterified blend of one or more liquid oils and one or more fats, wherein at least one fat of the blend comprises at least 80.0 wt.% of saturated C18 fatty acid residues (C18:0), relative to the total weight of fatty acid residues in the fat, and wherein the one or more oils of the blend comprise an oil having at least 65.0 wt.% of oleic acid residues, relative to the total weight of all fatty acid residues in the oil, such as high oleic sunflower oil.

7. The fat-continuous emulsion according to any one of claims 1 to 6, wherein the fat phase is essentially free from tropical fats and oils selected from the group consisting of: palm oil, coconut oil, shea butter, coconut butter, allanblackia oil, pentadesma butter, and fractions and combinations thereof.

8. The fat-continuous emulsion according to any one of claims 1 to 7, wherein the fat phase is essentially free from hydrogenated triglycerides.

9. The fat-continuous emulsion according to any one of claims 1 to 8, wherein the fat phase comprises:
- at most 4.0 wt.%, preferably at most 3.0 wt.%, or at most 2.5 wt.%, or at most 2.0 wt.%, or at most 1.5 wt.%, or at most 1.0 wt.%, of saturated C12 fatty acid residues (C12:0), relative to the total weight of all fatty acid residues in the fat phase; and/or
- at most 10.0 wt.%, preferably at most 8.0 wt.%, or at most 5.0 wt.%, of saturated C16 fatty acid residues (C16:0), relative to the total weight of all fatty acid residues in the hardstock.

10. A method for the preparation of an edible fat-continuous emulsion according to any one of claims 1 to 9, the method comprising:
a) blending the aqueous phase and the fat phase; and
b) processing the blend of the fat phase and the aqueous phase in a processing line comprising at least one pump, at least one working unit, and optionally at least one cooling unit.

11. The method according to claim 10, wherein the method further comprises a step of preparing the hardstock by enzymatic or chemical interesterification of a blend of one or more fats and one or more liquid oils or by enzymatic or chemical transesterification of a blend of one or more liquid oils and a fatty acid mixture,
wherein at least one fat of the blend comprises at least 80.0 wt.% of saturated C18 fatty acid residues (C18:0), relative to the total weight of fatty acid residues in the fat, or wherein the fatty acid mixture of the blend comprises at least 80.0 wt.% saturated C18 fatty acids (C18:0), relative to the total weight of fatty acids in the mixture; and
wherein the one or more oils of the blend comprise an oil having at least 65.0 wt.% of oleic acid residues, relative to the total weight of all fatty acid residues in the oil, such as high oleic sunflower oil.

12. The method according to claim 10 or 11, wherein the total residence time in the at least one working unit is at least 60 seconds.

13. The method according to any one of claims 10 to 12, wherein the blend of the fat phase and the aqueous phase is cooled to a temperature between 4.0 °C and 15.0 °C.

14. A spread product comprising an edible fat-continuous emulsion according to any one of claims 1 to 9.

15. Use of an edible fat-continuous emulsion according to any one of claims 1 to 9, or a spread product according to claim 14 as a table spread, or as a baking or frying margarine.
